# EUROPEAN PATENT APPLICATION

(11) **EP 2 658 184 A1**
(43) Date of publication of application: **30.10.2013**
(21) Application number: 11852003.0
(22) Date of filing: 10.08.2011
(51) Int. Cl.: H04L 12/56

(54) **METHOD AND SYSTEM FOR UPDATING BORDER GATEWAY PROTOCOL ROUTES**

(30) Priority: 20.12.2010 CN 201010602801
(71) Applicant: Huawei Technologies Co., Ltd., Shenzhen, Guangdong 518129 (CN)
(72) Inventor: DONG, Jie, Shenzhen Guangdong 518129 (CN)
(74) Representative: Isarpatent
(86) International application number: PCT/CN2011/078227
(87) International publication number: WO 2012/083704

(57) **Abstract**

The present invention provides a method and a system for updating a Border Gateway Protocol route, and relates to the field of communications technologies. The system according to the embodiments of the present invention includes a classification module and an update module; the method includes: classifying routing information of a BGP according to path attributes of the routing information; and during update of the routing information, after the update of the routing information of one classification is completed, sending a message to notify that the update of the routing information of the classification is completed. In the embodiments of the present invention, the routing information can be pre-classified; during route update, the receiving end can be notified after the update of the routing information of one classification is completed, and the receiving end can perform related processing such as BGP routing and route redistribution on the route, without waiting for the update completion of all the routes.

## Description

### CROSS-REFERENCE TO RELATED APPLICATIONS

The application claims priority to Chinese Patent Application No. 201010602801.7, filed with the Chinese Patent Office on December 20, 2010, and entitled "METHOD AND SYSTEM FOR UPDATING A BORDER GATEWAY PROTOCOL ROUTE", which is incorporated herein by reference in its entirety.

### TECHNICAL FIELD

The present invention relates to the field of communications, and in particular, to a method and a system for updating a Border Gateway Protocol route, and an End-of-RIB marker.

### BACKGROUND

A BGP (Border Gateway Protocol, Border Gateway Protocol) is an exterior gateway protocol used for communication between different ASs (Autonomous System, autonomous system), and is widely used in control signaling of a variety of VPN (Virtual Private Network, virtual private network) services.

An End-of-RIB marker (End-of-RIB marker; (RIB, Routing Information Base, routing information base)) of the BGP is a BGP update message in a special format. After advertising routing information update to a receiving end, a sending end sends the End-of-RIB marker to notify the receiving end that the update of the routing information is completed, thereby improving the efficiency of BGP route convergence. The existing End-of-RIB marker may be applied in graceful restart of the BGP and other cases.

In the implementation of the present invention, the inventors find that the prior art at least has the following problems:
When the End-of-RIB marker is used in the existing BGP, the End-of-RIB marker is not sent from the sending end to the receiving end until all the BGP routing information at the sending end is completely updated, and the receiving end performs BGP route convergence only after the receiving end receives the End-of-RIB marker. As a result, the processing can be preformed only after all the BGP routing information is completely updated, resulting in slow route convergence of the receiving end and low route processing efficiency.

### SUMMARY

To solve a problem of low route processing efficiency in the prior art because it is required to wait for update completion of all BGP routing information of the sending end before an End-of-RIB marker is sent from a sending end to a receiving end to notify the receiving end to process all updated BGP routing information, embodiments of the present invention provide a method and a system for updating a Border Gateway Protocol route. The technical solutions are described in the following:
An embodiment of the present invention provides a method for updating a Border Gateway Protocol route, including:
   classifying routing information of a Border Gateway Protocol according to path attributes of the routing information; and
   when a sending end advertises route update to a receiving end, after the update of routing information of a pre-set classification is completed, sending, from the sending end, a message to notify the receiving end that the update of the routing information of the classification is completed.

An embodiment of the present invention provides a system for updating a Border Gateway Protocol route, including:
a classification module, configured to classify routing information of a Border Gateway Protocol according to path attributes of the routing information; and
an update module, configured to, when a sending end advertises route update to a receiving end, after the update of routing information of a pre-set classification is completed, send, from the sending end, a message to notify the receiving end that the update of the routing information of the classification is completed.

The beneficial effects of the embodiments of the present invention are as follows: in the embodiments of the present invention, the routing information can be pre-classified; during route update, the receiving end may be notified after the update of routing information of a pre-set classification is completed, and then the receiving end may perform related processing such as BGP routing and route redistribution on the route, without waiting for the update completion of all the routes. Compared with the prior art in which the updated routing information can be processed only after the update of all the routing information is completed, the embodiments of the present invention can improve route processing efficiency.

### BRIEF DESCRIPTION OF DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic flow chart of Embodiment 1 of the present invention;
FIG. 2 is a schematic flow chart of Embodiment 2 of the present invention;
FIG. 3 is a network structural diagram applying a method in an embodiment of the present invention;
FIG. 4 is a schematic structural diagram of Embodiment 3 of the present invention;
FIG. 5 is a schematic structural diagram of Embodiment 4 of the present invention;
FIG. 6 is a schematic diagram showing a frame format of an End-of-RIB marker according to Embodiment 5 of the present invention; and
FIG. 7 is a schematic diagram showing another frame format of the End-of-RIB marker according to Embodiment 5 of the present invention.

### DESCRIPTION OF EMBODIMENTS

In order to make the objectives, technical solutions and advantages of the present invention clearer, the embodiments of the present invention are described in detail in the following with reference to the accompanying drawings.

### Embodiment 1

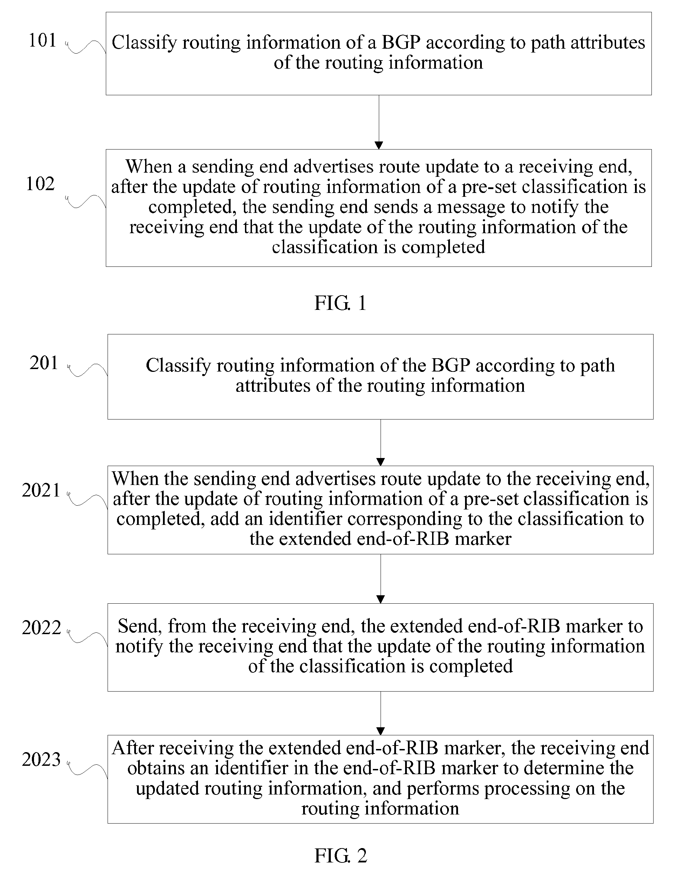

Embodiment 1 of the present invention provides a method for updating a BGP (Border Gateway Protocol) route, and as shown in FIG. 1, the process of the method includes the following steps:
Step 101: Classify routing information of a BGP (Border Gateway Protocol) according to path attributes of the routing information; step 102: when a sending end advertises route update to a receiving end, after the update of routing information of a pre-set classification is completed, the sending end sends a message to notify the receiving end that the update of the routing information of the classification is completed.

Both the sending end and the receiving end are network devices capable of running the BGP. In the embodiment of the present invention, the routing information may be classified according to path attributes of the routing information, such as a BGP community attribute, a BGP extended community attribute, or a BGP route target (Route Target). In the present invention, generally, the classification is performed on the basis of a variety of BGP path attributes, excluding a protocol type (for example, an IP address type) and the like.

Multiple methods can be used to determine whether the update of routing information of a pre-set classification is completed, for example, a sub-routing table can be set for each classification or routing information can be stored in a routing table according to a classification sequence; it can be known whether the update of routing information of a pre-set classification is completed, which belongs to the prior art, so the details are not described herein again.

In the embodiment of the present invention, the routing information may be pre-classified according to the features of the routing information; during route update, the receiving end may be notified after the update of the routing information of one classification is completed, and then may perform related processing such as BGP routing and route redistribution on the route, without waiting for the update completion of all the routes. Compared with the prior art in which the updated routing information can be processed only after the update of all the routing information is completed, the embodiment of the present invention can improve route processing efficiency.

### Embodiment 2

Embodiment 2 of the present invention provides a method for updating a BGP route, and as shown in FIG. 2, the process of the method includes the following steps:
Step 201: Classify routing information of the BGP.

In an embodiment of the present invention, routes connected to different VPNs (Virtual Private Network, virtual private network) in a network may be classified, and a priority is set for each classification. During VPN route update, after the update of a VPN route with a high priority is completed, the receiving end may perform corresponding processing such as route convergence for the VPN.

In another embodiment of the present invention, route update may be triggered due to the update of an ORF (Outbound Route Filter, outbound route filter). When the update of a route meeting a specific ORF requirement is completed, it may be notified, through an extended End-of-RIB marker in the present invention, that the update of the route complying with a specific policy is completed.

In another embodiment of the present invention, route update may be triggered due to the update of RT-Constrain (VPN route target-constrain). When the update of a route meeting a specific Route Target (RT) extended community attribute is completed, it may be notified, through an extended End-of-RIB marker in the present invention, that the update of the route meeting a specific Route Target is completed.

In another embodiment of the present invention, route update may be triggered due to Selective Route Refresh (Selective Route Refresh). When the update of a route meeting a specific filtering requirement is completed, it may be notified, through an extended End-of-RIB marker in the present invention, that the update of the route meeting a specific requirement is completed.

The extended End-of-RIB marker refers to that the existing End-of-RIB marker at least includes an identifier for indicating a classification of the routing information.

In the embodiment of the present invention, the receiving end can be notified, through the extended End-of-RIB marker, that the update of the routing information of a special type is completed. The End-of-RIB marker of the BGP in the prior art has two structures, that is, has different frame formats for an IPv4 unicast address family and another address family excluding the IPv4 unicast address family. In the embodiment of the present invention, a "path attribute" field is added to frames of the two types of the End-of-RIB marker.

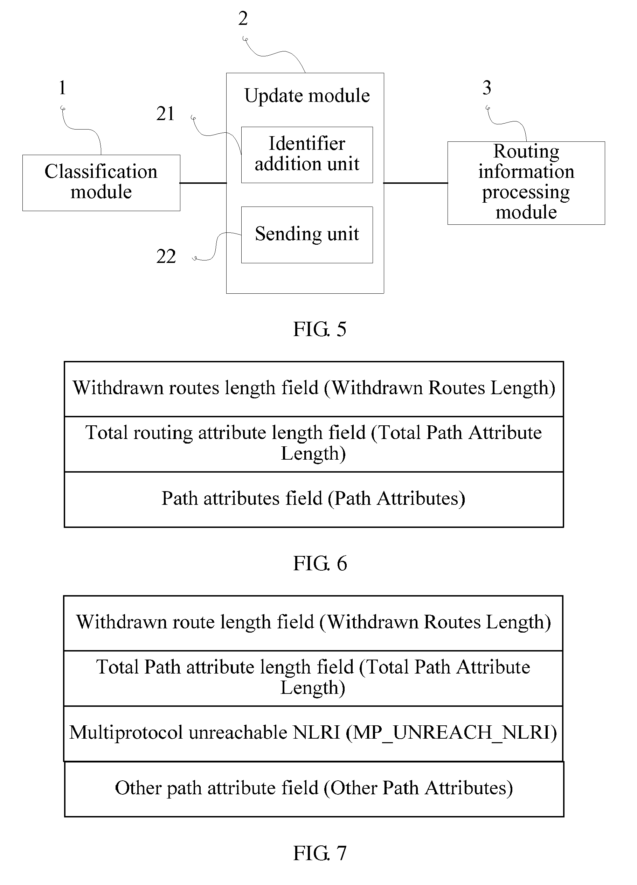

In the prior art, for the IPv4 unicast address family, the End-of-RIB marker includes a withdrawn route length field (Withdrawn Routes Length), which may be 2 octets (2 octets) long; and a total path attribute length field (Total Path Attribute Length), which may be 2 octets (2 octets) long. As shown in FIG. 6, a path attribute field (Path Attributes) may be added to the End-of-RIB marker in the embodiment of the present invention, where the field may include one or multiple BGP path attributes, and the length of the field is determined by the total path attribute length field.

In the prior art, for another address family excluding the IPv4 unicast address family, the End-of-RIB marker includes: a withdrawn route length field (Withdrawn Routes Length), which may be 2 octets (2 octets) long; a total path attribute length field (Total Path Attribute Length), which may be 2 octets (2 octets) long; and multiprotocol unreachable NLRI (MP_UNREACH_NLRI, (NLRI, Network Layer Reachability Information, network layer reachability information)). As shown in FIG. 7, another path attribute field for identifying a route classification is added to the End-of-RIB marker in the embodiment of the present invention, where a length of the field may be obtained through the total path attribute length field.

A path attribute field or another path attribute field may be added to the extended End-of-RIB marker (End-of-RIB marker) in the embodiment of the present invention, where the path attribute or another path attribute field is used to identify a specific classification, so that the receiving end is notified that the update of the routing information of the classification is completed. For example, the path attribute field or another path attribute field may include one or multiple types of BGP path attributes:
an AS path (AS_PATH);
a next hop (NEXT_HOP);
a community attribute (COMMUNITY);
an extended community attribute (EXTENDED COMMUNITIES);
an aggregator (AGGREGATOR);
a cluster list (CLUSTER_LIST);
a 4-byte AS path (AS4_PATH);
a 4-byte AS aggregator (AS4_AGGREGATOR); and
an IPv6 address specific extended community (IPv6 Address Specific Extended Community) attribute.

Step 202: When the sending end advertises route update to the receiving end, after the update of routing information of a pre-set classification is completed, the sending end sends a message to notify the receiving end that the update of the routing information of the classification is completed.

The message may be an extended End-of-RIB marker and step 202 may specifically include the following sub-steps:
Step 2021: When the sending end and the receiving end update the routing information, after the update of routing information of a pre-set classification is completed, add an identifier corresponding to the classification to the extended End-of-RIB marker (End-of-RIB marker).

Step 2022: Send, from the sending end, the extended End-of-RIB marker to the receiving end to notify the receiving end that the update of the routing information of the classification is completed.

Furthermore, the method may further include the following steps:
Step 203: After receiving the End-of-RIB marker sent by the sending end, the receiving end obtains an identifier in the End-of-RIB marker to determine routing information of a pre-set classification which is completely updated, and performs processing such as BGP routing on routing information of a pre-set classification.

In the embodiment of the present invention, a piece of path attribute information for identifying a route classification is added through the existing End-of-RIB marker; when the update of the routing information of one classification is completed, corresponding attribute information is added to the End-of-RIB marker, and the extended End-of-RIB marker mentioned in the embodiment of the present invention is sent to the receiving end. The receiving end may determine an updated classification according to the received End-of-RIB marker, and perform route processing on the classification.

The embodiment of the present invention is further described below with reference to a specific example.

In a BGP VPN scenario, when the update of routes of all VPNs is not completed, by notifying that the update of a route of a specific VPN is completed, a peer can preferentially perform routing calculation and route advertisement on the route of the VPN, so as to implement independent route convergence of each VPN and priority-based route convergence between different VPNs, thereby accelerating the convergence speed of the VPN routes; where the route of the specific VPN refers to routing information carrying specific Route Target information.

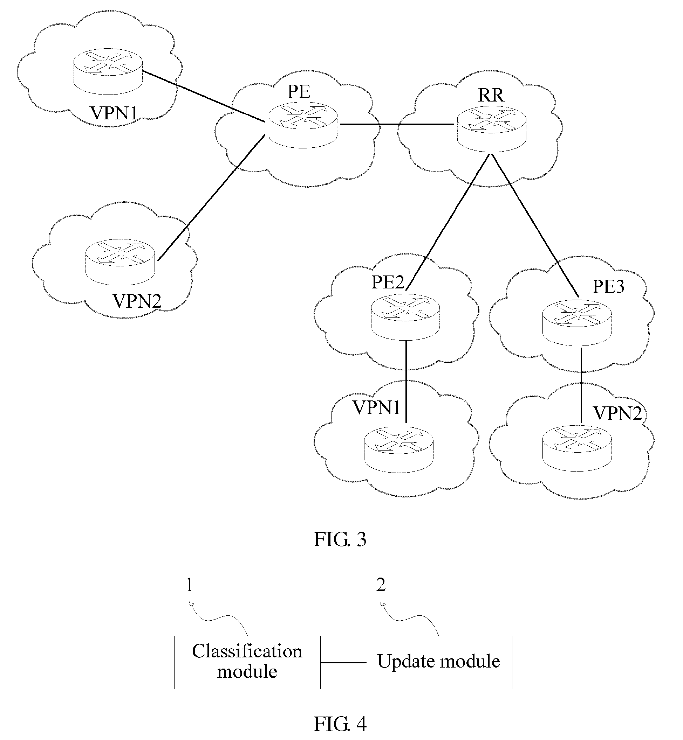

Taking a network structure in FIG. 3 as an example, a PE1 (provider edge router) is connected to two VPN sites: VPN1 and VPN2. When receiving route advertisements sent by VPN1 and VPN2 through PE2 and PE3, a route reflector (RR) sends the route advertisements to the PE1.

In the embodiment of the present invention, different priorities may be preset for VPN1 and VPN2, and a route of VPN1 is preferentially advertised. After the update of the route of VPN1 is completed, the RR notifies, by using the End-of-RIB marker (End-of-RIB marker) in the embodiment of the present invention, PE1 that the update of the route of VPN1 is completed. PE1 may immediately perform related processing such as BGP routing and route redistribution on the route of VPN1, without waiting for completion of the update of the route of other VPNs.

Meanwhile, the PE1 continues to receive a route of VPN2, and after the update of the route of VPN2 is completed, the RR sends an extended End-of-RIB marker to notify that the update of the route of VPN2 is completed; the PE1 may perform processing such as routing on VPN2, so as to implement priority-based route convergence between different VPNs and independent route convergence of each VPN.

Definitely, the foregoing embodiment is merely an example of the embodiment of the present invention, and the embodiment of the present invention may further be applied in the following cases:
The BGP may trigger route refreshing or route update by using many mechanisms currently, including BGP Route Refresh [RFC2918], BGP Outbound Route Filter [RFC 5291] [RFC 5292], and RT-Constrain [RFC 4684]. When completing the update of a route meeting a specific requirement, the peer may notify the receiving end that the update of the routing information of the classification is completed. For example, an End-of-RIB marker may be sent and an identifier is added to the End-of-RIB marker, including the following cases:
   1. For a scenario in which the BGP ORF (Outbound Route Filter) mechanism is used, after the peer advertises route update as ORF update is performed, it may be notified that the update of a route meeting a specific filtering requirement is completed by using an extended End-of-RIB marker to carry specific attribute information.
   2. For a scenario in which the RT-Constrain is used, after the peer advertises route update due to RT-Constrain information update, it may be notified that the update of a route meeting a specific RT is completed by using an End-of-RIB marker to carry specific Route Target (RT) information.
   3. In a scenario in which the update of a specific route is requested by using the Route-Refresh mechanism, it may be notified that the update of a route meeting a specific requirement is completed by using an End-of-RIB marker to carry specific attribute information.

### Embodiment 3

Embodiment 3 of the present invention provides a system for updating a BGP route, and as shown in FIG. 4, a structure of the system includes:
a classification module 1, configured to classify routing information of a BGP (Border Gateway Protocol) according to path attributes of the routing information; and
an update module 2, configured to, when a sending end advertises route update to a receiving end, after the update of routing information of a pre-set classification is completed, send, from the sending end, a message to notify the receiving end that the update of the routing information of the classification is completed.

Both the sending end and the receiving end are network devices capable of running the BGP. In the embodiment of the present invention, the routing information may be classified according to path attributes of the routing information, such as a BGP community attribute, a BGP extended community attribute, or a BGP route target (Route Target). In the present invention, generally, the classification is performed on the basis of a variety of BGP path attributes, excluding a protocol type (for example, an IP address type) and the like.

Multiple methods can be used to determine whether the update of routing information of a pre-set classification is completed, for example, a sub-routing table can be set for each classification or routing information can be stored in a routing table according to a classification sequence; it can be known whether the update of routing information of a pre-set classification is completed, which belongs to the prior art, so the details are not described herein again.

In the embodiment of the present invention, the routing information may be pre-classified according to the protocol of the routing information; during route update, the receiving end may be notified after the update of the routing information of one classification is completed, and then may perform related processing such as BGP routing and route redistribution on the route, without waiting for the update completion of all the routes. Compared with the prior art in which the updated routing information can be processed only after the update of all the routing information is completed, the embodiment of the present invention can improve route processing efficiency.

### Embodiment 4

Embodiment 4 of the present invention provides a system for updating a BGP route, and a structure of the system is shown in FIG. 5 and includes the following modules.

A classification module 1 is configured to classify routing information of a BGP according to path attributes of the routing information.

In an embodiment of the present invention, routes connected to different VPNs in a network may be classified, and a priority is set for each classification. During VPN route update, after the update of a VPN route with a high priority is completed, the receiving end may perform corresponding processing such as route convergence for the VPN.

In another embodiment of the present invention, route update may be triggered due to the update of an ORF (Outbound Route Filter, outbound route filter). When the update of a route meeting a specific ORF requirement is completed, it may be notified, through an extended End-of-RIB marker in the present invention, that the update of the route complying with a specific policy is completed.

In another embodiment of the present invention, route update may be triggered due to the update of RT-Constrain (VPN route target-constrain). When the update of a route meeting a specific Route Target (RT) extended community attribute is completed, it may be notified, through an extended End-of-RIB marker in the present invention, that the update of the route meeting a specific Route Target is completed.

In another embodiment of the present invention, route update may be triggered due to Selective Route Refresh (Selective Route Refresh). When the update of a route meeting a specific filtering requirement is completed, it may be notified, through an extended End-of-RIB marker in the present invention, that the update of the route meeting a specific requirement is completed.

The extended End-of-RIB marker refers to that the existing End-of-RIB marker at least includes an identifier for indicating a classification of the routing information.

In the embodiment of the present invention, the receiving end can be notified, through the extended End-of-RIB marker, that the update of the routing information of a special type is completed. The End-of-RIB marker of the BGP in the prior art has two structures, that is, has different frame formats for an IPv4 unicast address family and another address family excluding the IPv4 unicast address family. In the embodiment of the present invention, a "path attribute" field is added to frames of the two types of the End-of-RIB marker.

In the prior art, for the IPv4 unicast address family, the End-of-RIB marker includes a withdrawn route length field (Withdrawn Routes Length), which may be 2 octets (2 octets) long; and a total path attribute length field (Total Path Attribute Length), which may be 2 octets (2 octets) long. As shown in FIG. 6, a path attribute field (Path Attributes) may be added to the End-of-RIB marker in the embodiment of the present invention, where the field may include one or multiple BGP path attributes, and the length of the field is determined by the total path attribute length field.

In the prior art, for another address family excluding the IPv4 unicast address family, the End-of-RIB marker includes: a withdrawn route length field (Withdrawn Routes Length), which may be 2 octets (2 octets) long; a total path attribute length field (Total Path Attribute Length), which may be 2 octets (2 octets) long; and multiprotocol unreachable NLRI (MP_UNREACH_NLRI, (NLRI, Network Layer Reachability Information, network layer reachability information)). As shown in FIG. 7, another path attribute field for identifying a route classification is added to the End-of-RIB marker in the embodiment of the present invention, where a length of the field may be obtained through the total path attribute length field.

A path attribute field or another path attribute field may be added to the extended End-of-RIB marker (End-of-RIB marker) in the embodiment of the present invention, where the path attribute or another path attribute field is used to identify a specific classification, so that the receiving end is notified that the update of the routing information of the classification is completed. For example, the path attribute field or another path attribute field may include one or multiple types of BGP path attributes:
an AS path (AS_PATH);
a next hop (NEXT_HOP);
a community attribute (COMMUNITY);
an extended community attribute (EXTENDED COMMUNITIES);
an aggregator (AGGREGATOR);
a cluster list (CLUSTER_LIST);
a 4-byte AS path (AS4_PATH);
a 4-byte AS aggregator (AS4_AGGREGATOR); and
an IPv6 address specific extended community (IPv6 Address Specific Extended Community) attribute.

An update module 2 is configured to, when the sending end advertises route update to the receiving end, after the update of routing information of a pre-set classification is completed, send a message to notify the receiving end that the update of the routing information of the classification is completed.

The update module 2 may specifically include:
an identifier addition unit 21, configured to, when the sending end advertises the route update to the receiving end, after the update of routing information of a pre-set classification is completed, add an identifier corresponding to the classification to the message, where the message is an End-of-RIB marker; and
a sending unit 22, configured to send, from the sending end, the End-of-RIB marker to the receiving end to notify the receiving end that the update of the routing information of the classification is completed.

Furthermore, the system may further include:
a routing information processing module 3, configured to, after the receiving end receives the End-of-RIB marker sent from the sending end, obtain the identifier in the End-of-RIB marker to determine the updated routing information of the classification;
and make the receiving end process the routing information of the classification.

In the embodiment of the present invention, a piece of path attribute information for identifying a route classification is added through the existing End-of-RIB marker; when the update of the routing information of one classification is completed, corresponding attribute information is added to the End-of-RIB marker, and the extended End-of-RIB marker mentioned in the embodiment of the present invention is sent to the receiving end. The receiving end may determine an updated classification according to the received End-of-RIB marker, and perform route processing on the classification.

It should be noted that, in the foregoing embodiment, the division of the foregoing functional modules is described through examples. In actual implementation, the foregoing functions may be implemented, through assignment, by different functional modules as required, that is, the internal structure of the apparatus may be divided into different functional modules to implement all or part of functions described above. In addition, the system for updating the BGP route provided in the foregoing embodiment belongs to the same concept as the embodiment of the method for updating the BGP route. Therefore, for the same part, the details are not described again.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a Read Only Memory (ROM), a Random Access Memory (RAM), a magnetic disk or an optical disk.

The above descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A method for updating a Border Gateway Protocol route, comprising:
classifying routing information of a Border Gateway Protocol according to path attributes of the routing information; and
when a sending end advertises route update to a receiving end, after the update of routing information of a pre-set classification is completed, sending, from the sending end, a message to notify the receiving end that the update of the routing information of the classification is completed.

2. The method for updating a Border Gateway Protocol route according to claim 1, wherein the sending, from the sending end, the message to notify that the update of the routing information of the classification is completed comprises:
during the update of the routing information, after the update of the routing information of the classification at the sending end is completed, adding an identifier corresponding to the classification to the message, wherein the message is an End-of-RIB marker; and
sending, from the sending end, the End-of-RIB marker to the receiving end to notify the receiving end that the update of the routing information of the classification is completed.

3. The method for updating a Border Gateway Protocol route according to claim 1 or 2, further comprising:
after the receiving end receives the End-of-RIB marker sent from the sending end, obtaining the identifier in the End-of-RIB marker to determine the updated routing information of the classification, and processing the routing information of the classification.

4. A system for updating a Border Gateway Protocol route, comprising:
a classification module, configured to classify routing information of a Border Gateway Protocol according to path attributes of the routing information; and
an update module, configured to, when a sending end advertises route update to a receiving end, after the update of routing information of a pre-set classification is completed, send, from the sending end, a message to notify the receiving end that the update of the routing information of the classification is completed.

5. The system for updating the Border Gateway Protocol route according to claim 4, wherein the update module comprises:
an identifier addition unit, configured to, when the sending end advertises route update to the receiving end, after the update of the routing information of the classification at the sending end is completed, add an identifier corresponding to the classification to the message, wherein the message is an End-of-RIB marker; and
a sending unit, configured to send, from the sending end, the End-of-RIB marker to the receiving end to notify the receiving end that the update of the routing information of the classification is completed.

6. The system for updating the Border Gateway Protocol route according to claim 4 or 5, wherein the system further comprises:
a routing information processing module, configured to, after the receiving end receives the End-of-RIB marker sent from the sending end, obtain the identifier in the End-of-RIB marker to determine the updated routing information of the classification; and make the receiving end process the routing information of the classification.
